(19) **Europäisches Patentamt / European Patent Office / Office européen des brevets**

(11) **EP 1 221 219 B1**

(12) **FASCICULE DE BREVET EUROPEEN**

(45) Date de publication et mention
de la délivrance du brevet:
**14.01.2009 Bulletin 2009/03**

(21) Numéro de dépôt: **00962648.2**

(22) Date de dépôt: **14.09.2000**

(51) Int Cl.:
**H04L 5/02** *(2006.01)*    **H04L 25/03** *(2006.01)*
**H04L 27/26** *(2006.01)*

(86) Numéro de dépôt international:
**PCT/FR2000/002555**

(87) Numéro de publication internationale:
**WO 2001/020840 (22.03.2001 Gazette 2001/12)**

(54) **PROCEDE D'EGALISATION DANS DES RECEPTEURS UTILISANT UNE COMBINAISON DES TECHNIQUES DE MODULATIONS A PORTEUSES MULTIPLES ET A ACCES MULTIPLE PAR REPARTITION DE CODES**

VERFAHREN ZUR ENTZERRUNG IN EMPFÄNGERN UNTER MITVERWENDUNG VON MEHRTRÄGERMODULATION ZUSAMMEN MIT CDMA

EQUALISING METHOD IN RECEIVERS USING A COMBINATION OF MULTIPLE CARRIER AND CODE DIVISION MULTIPLE ACCESS MODULATING TECHNIQUES

(84) Etats contractants désignés:
**AT BE CH CY DE DK ES FI FR GB GR IE IT LI LU MC NL PT SE**

(30) Priorité: **14.09.1999 FR 9911689**
**09.12.1999 FR 9915919**

(43) Date de publication de la demande:
**10.07.2002 Bulletin 2002/28**

(73) Titulaires:
- **FRANCE TELECOM**
  **75015 Paris (FR)**
- **TDF**
  **92120 Montrouge (FR)**

(72) Inventeurs:
- **HELARD, Jean-François**
  **F-35700 Rennes (FR)**
- **BAUDAIS, Jean-Yves**
  **35000 Rennes (FR)**

(74) Mandataire: **Bioret, Ludovic**
**Cabinet Vidon**
**16 B, rue de Jouanet - B.P. 90333**
**Technopole Atalante**
**35703 Rennes Cedex 07 (FR)**

(56) Documents cités:

- SANADA T ET AL: "A MULTIUSER INTERFERENCE CANCELLATION TECHNIQUE UTILIZING CONVOLUTIONAL CODES AND OTHOGONAL MULTICARRIER MODULATION FOR WIRELESS INDOOR COMMUNICATIONS" IEEE JOURNAL ON SELECTED AREAS IN COMMUNICATIONS, vol. 14, no. 8, octobre 1996 (1996-10), pages 1500-1509, XP000635677 New York, ÉTATS-UNIS ISSN: 0733-8716
- STIRLING-GALLACHER R A ET AL: "PERFORMANCE OF A OFDM-CDMA SYSTEM WITH ORTHOGONAL CONVOLUTIONAL CODING AND INTERFERENCE CANCELLATION" IEEE VEHICULAR TECHNOLOGY CONFERENCE, vol. 2, 4 mai 1997 (1997-05-04), pages 860-864, XP000736730 New York, ÉTATS-UNIS ISBN: 0-7803-3660-7
- JEON W G ET AL: "AN EQUALIZATION TECHNIQUE FOR OFDM AND MC-CDMA IN A TIME-VARYING MULTIPATH FADING CHANNELS" IEEE INTERNATIONAL CONFERENCE ON ACOUSTICS, SPEECH, AND SIGNAL PROCESSING, vol. 3, 21 avril 1997 (1997-04-21), pages 2529-2532, XP002139567 Los Alamitos, ÉTATS-UNIS

- **WIEL VAN DE O ET AL: "A COMPARISON OF BIDIMENSIONAL RLS AND LMS EQUALIZERS FOR OFDM/DS TRANSMISSION IN AN INDOOR ENVIRONMENT" PROCEEDINGS OF THE GLOBAL TELECOMMUNICATIONS CONFERENCE (GLOBECOM), IEEE, 28 novembre 1994 (1994-11-28), pages 71-75, XP002032238 New York, ÉTATS-UNIS ISBN: 0-7803-1821-8**

**Description**

**1. Domaine général de l'invention**

Le domaine de l'invention est celui de la transmission, et plus précisément de la réception, de signaux numériques multiporteuses. L'invention concerne essentiellement l'égalisation, ou la détection, dans des récepteurs de signaux reposant sur une combinaison des techniques de modulations à porteuses multiples et à accès multiple par répartition de codes.

Le développement et la mise au point de techniques permettant le transfert de données multimédia à haut débit pour un grand nombre d'utilisateurs simultanément est primordial pour les générations futures de communications hertziennes. On cherche donc à développer de nouvelles techniques de transmissions hertziennes permettant de satisfaire toujours mieux aux contraintes d'efficacité spectrale liées à la pénurie du spectre et au nombre croissant d'utilisateurs.

Une approche connue consiste à rechercher une combinaison optimale des techniques de modulations à porteuses multiples à grande efficacité spectrale (de type OFDM) et des techniques d'Accès Multiples par Répartition de Codes (de type AMRC). Ces nouvelles techniques pourront par exemple s'appliquer aux systèmes de radiocommunications mobiles (de type UMTS et post UMTS) ou aux systèmes de communications à l'intérieur ou à l'extérieur des bâtiments pour en augmenter la robustesse et la capacité de transmission.

**2. Etat de l'art**

**2.1 Contexte scientifique**

Depuis 1993, quelques contributions proposant une combinaison des techniques de modulations à porteuses multiples et à étalement de spectre ont été publiées par quelques équipes internationales [S. Hara, R. Prasad, "Overview of multicarrier CDMA" (IEEE Communications Magazine, décembre 1997, pp 126-133).]. Ainsi, il existe trois familles de systèmes de transmission connues à ce jour combinant les techniques OFDM et AMRC :

- l'AMRC multiporteuses ou MC-CDMA (Multi-Carrier CDMA), l'AMRC multipilotes ou MT-CDMA (Multi-Tone CDMA) et
- l'AMRC multiporteuses à séquence directe ou MC-DS-CDMA (Multi-Carrier Direct-Sequence CDMA).

Elles se distinguent par la manière dont elles combinent les fonctions OFDM et AMRC, par leur technique d'étalement ou d'accès multiples et par leur répartition fréquentielle.

L'invention proposée s'applique notamment, mais non exclusivement, à la première de ces familles, l'AMRC multiporteuses ou MC-CDMA.

**2.2 Description d'un système MC-CDMA**

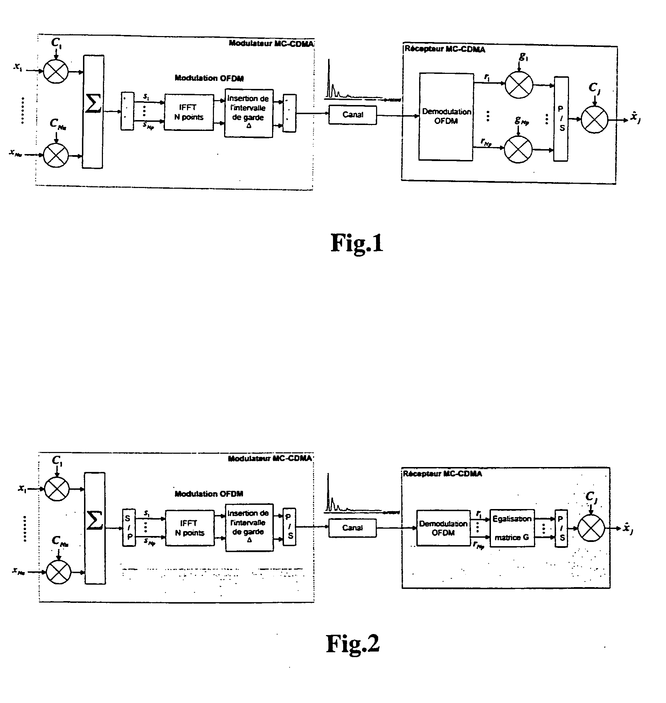

Dans le modulateur MC-CDMA représenté sur la figure 1, et connu en lui-même, le flux de données est tout d'abord étalé dans le domaine fréquentiel en utilisant un code d'étalement, puis transmis sur les différentes sous-porteuses du multiplex OFDM. Une fraction de chaque donnée d'origine, correspondant à un "chip" du code d'étalement de longueur $L_c$, est ainsi transmise par chacune des $N_p$ sous-porteuses.

Ainsi chaque symbole $x^n_j$ affecté à l'utilisateur $j$ (avec $j = 1....,N_u$) et transmis durant l'intervalle $n$, est multiplié par son code d'étalement spécifique $C_j = [c_j^1, c_j^2,...,c_j^{Lc}]^T$ de longueur $L_c$, où $[ ]^T$ signifie vecteur transposé.

Le vecteur des symboles transmis durant le $n^{ème}$ symbole MC-CDMA par tous les utilisateurs peut s'écrire $X^n = [x^n_1, x^n_2,...,x^nj,...,x^n_{Lc}]^T$ avec $x^n_j = 0$ quand l'utilisateur $j$ n'est pas actif. La matrice des codes C est alors égale à :

**3**

$$C = \begin{bmatrix} c_1^1 & c_2^1 & ... & c_{Lc}^1 \\ c_1^2 & c_2^2 & ... & c_{Lc}^2 \\ ... & ... & ... & ... \\ c_1^{Lc} & c_2^{Lc} & ... & c_{Lc}^{Lc} \end{bmatrix} \tag{1}$$

où le $j^{ème}$ vecteur colonne de **C** correspond au code d'étalement $C_j$ de l'utilisateur $j$.

Dans le cas d'une liaison descendante où les différents signaux s'adressant aux différents utilisateurs sont émis de façon synchrone, les codes utilisés sont généralement choisis orthogonaux, ce qui permet d'obtenir en réception une meilleure réjection des interférences entre utilisateurs.

Ainsi, avec des codes de Walsh-Hadamard, le nombre maximal d'utilisateurs est égal au nombre de chips par code. Généralement, le nombre $L_c$ de chips du code d'étalement est choisi égal au nombre $N_p$ de sous-porteuses mais des variantes sont possibles pour mieux dimensionner le signal généré vis-à-vis des conditions de transmission (canal, aspect cellulaire,...).

## 23 Les techniques de détection

### 2.3.1 Les techniques "traditionnelles" d'égalisation linéaire

Dans un récepteur MC-CDMA, le désétalement est réalisé dans le domaine fréquentiel après l'opération de Transformée de Fourier Directe mise en oeuvre dans le démodulateur OFDM comme cela est illustré en figure en figure 1.

L'utilisation de codes orthogonaux, tels que les codes de Walsh-Hadamard dans le cas d'un système synchrone, garantit dans un canal gaussien, l'absence d'interférences d'accès multiple. En revanche, lors d'une transmission dans un canal sélectif en fréquence, l'orthogonalité entre les codes est détruite ce qui crée des interférences entre utilisateurs.

Dans l'hypothèse où la durée de l'intervalle de garde est plus longue que l'étalement de la réponse impulsionnelle du canal, et que celui-ci varie lentement par rapport à la durée du symbole, l'effet du canal sur ia $k^{ème}$ sous-porteuse peut être approximé sur toute la durée symbole par une composante complexe notée $h_k = \rho_k e^{i\theta k}$.

Dans ce cas, la matrice du canal est diagonale et égale à :

$$H = \begin{bmatrix} h_1 & ... & 0 & 0 \\ ... & h_2 & ... & 0 \\ 0 & ... & ... & ... \\ 0 & 0 & ... & h_{Np} \end{bmatrix} \tag{2}$$

En notant $N = [n_1, n_2,...,n_{Np}]^T$ le vecteur représentant les termes de bruit et $n_k$ le terme de bruit affectant la $k^{ème}$ sous-porteuse de variance $\sigma_N^2 = E\{|n_k|^2\}$, $k = 1,...,N_p$. Le vecteur reçu est alors :

$$R = [r_1, r_2,...,r_{Np}]^T = H.C.X + N \tag{3}$$

La matrice $G$ de dimension $N_p \times N_p$ est la matrice des coefficients d'égalisation.

Les techniques de détection mono-utilisateur consistent à détecter le signal utile sans prendre en compte l'interférence entre utilisateurs. Après l'opération de Transformée de Fourier Directe, le signal reçu est égalisé dans le domaine fréquentiel en multipliant chaque symbole reçu par un coefficient $g_k$ propre à chaque sous-porteuse, dans le but de compenser l'atténuation $\rho_k$ et le déphasage $\theta_k$, introduits par le canal à la fréquence considérée.

Les différentes méthodes de détection sont les suivantes (liste non exhaustive) :

- "Maximum Ratio Combining" (MRC) : la méthode MRC est optimale vis à vis du taux d'erreurs dans le cas où un seul utilisateur est actif. Elle consiste à multiplier chaque symbole par la réponse complexe conjuguée du canal :

$$g_k = h_k^*$$   (4)

- "Equal Gain Combining" (EGC) : la technique de détection EGC corrige uniquement la distorsion de phase du canal :

$$g_k = h_k^* / |h_k|$$   (5)

- "Orthogonality Restoring Combining" (ORC) ou "Zero Forcing" (ZF) : la technique ORC permet d'éliminer intégralement l'interférence entre utilisateurs en restituant l'orthogonalité entre les différents codes d'étalement. Dans ce cas, les coefficients sont égaux à :

$$g_k = 1 / h_k$$   (6)

Cependant, le principal inconvénient de cette méthode est que, pour les faibles amplitudes de $h_k$, la multiplication par une fonction inverse du canal se traduit par une forte amplification du bruit, ce qui dégrade rapidement le taux d'erreurs.
- "Controlled equalization" (CE) ou "Threshold ORC" (TORC) : la technique CE consiste à multiplier le signal reçu par la fonction inverse du canal uniquement lorsque le module $|h_k|$ de la réponse fréquentielle du canal pour la porteuse considérée dépasse un certain seuil. Une amélioration de ce procédé peut être obtenue en appliquant l'EGC pour les porteuses ayant été fortement atténuées, ce qui permet de compenser la distorsion de phase du canal pour les sous-porteuses considérées.

### 2.3.2 La technique classique de détection selon le critère du minimum de l'Erreur Quadratique Moyenne ("Minimum Mean Square Error" ou MMSE)

L'égalisation classiquement proposée en MC-CDMA selon le critère MMSE a pour but de minimiser indépendamment sur chaque porteuse k la valeur quadratique moyenne de l'erreur $\varepsilon_k$ entre le signal transmis $s_k$ et son estimation $s/_k = g_k.r_k$ générée en sortie de l'égaliseur :

$$J = E\left\{|\varepsilon_k|^2\right\} = E\left\{|s_k - g_k r_k|^2\right\}$$   (7)

Lorsque le nombre d'utilisateurs est égal à la longueur $L_c$ du code, les coefficients de l'égaliseur selon le critère de la minimisation de l'erreur quadratique moyenne sont égaux à :

$$g_k = \frac{\overline{h_k^*}}{|h_k|^2 + 1/\gamma_k}$$   (8)

où $\gamma_k$ est le rapport signal à bruit pour la sous-porteuse $k$. Lorsque le nombre d'utilisateurs $N_u$ est inférieur à la longueur $L_c$ du code, les coefficients de l'égaliseur selon le critère de la minimisation de l'erreur quadratique moyenne sont égaux à :

$$g_k = \frac{h_k^*}{|h_k|^2 + \frac{L_c}{N_u} \cdot \frac{1}{\gamma_X}} \qquad (9)$$

où $\gamma_X$ est le rapport signal à bruit du symbole transmis $x$.

Cela est notamment détaillé dans le document de S. Kaiser, "Analytical performance evaluation of OFDM-CDMA mobile radio systems", (Proceedings First European Personal and Mobile Communications Conférence (EPMCC'95), Bologna, Italy, novembre 1995, p 215-220).

De la même façon que dans le cas des autres techniques de détection, la fonction d'égalisation est donc effectuée sur chaque sous-porteuse indépendamment en multipliant dans le domaine fréquentiel chacun des $N_p$ symboles générés en sortie de la FFT par un seul coefficient $g_k$ propre à chaque sous-porteuse.

*2.4 Annulation d'interférences*

Des techniques d'annulation d'interférences dans des systèmes multi-utilisateurs mettant en oeuvre une modulation à porteuses mulitples sont également connus de l'art antérieur.

Par exemple, le document « A multiuser interfernce cancellation technique utilizing convolutional codes and orthogonal multicarrier modulation for wireless indoor communications » (IEEE Journal on Selected Areas in Communications, Vol. 14, Issue 8, octobre 1996) de Y. SANADA et al. divulgue une technique d'annulation d'interférences utilisant des codes convolutifs orthogonaux. Plus précisément, l'annulation d'interférences selon ce document repose sur une technique d'égalisation classique, de type EGC (« equal gain combining »).

**3. Objectif de l'invention**

L'invention a notamment pour objectif de proposer une nouvelle technique d'égalisation, ou de détection, qui soit plus efficace que les techniques connues présentées ci-dessus en MC-CDMA, en particulier lorsque le système ne fonctionne pas à pleine charge, c'est-à-dire lorsque le nombre d'utilisateurs est inférieur à la longueur $L_c$ du code d'étalement

**4. Présentation de l'invention**

Cet objectif, ainsi que d'autres qui apparaîtront plus clairement par la suite, sont atteints à l'aide d'un procédé de réception d'un signal mettant en oeuvre une modulation à porteuses multiples et à accès multiples par répartition de codes, du type comprenant une étape de démodulation par application d'une transformation mathématique du domaine temporel vers le domaine fréquentiel, une étape d'égalisation (ou de détection) du signal transformé et une étape de désétalement du signal traité.

Selon l'invention, ladite étape d'égalisation tient compte, pour chacune des composantes dudit signal transformé, des perturbations affectant la porteuse portant ladite composante et au moins une autre desdites porteuses et d'au moins certains desdits codes d'étalement.

Ainsi, l'égalisation est effectuée selon une approche différente des techniques connues, qui reposent simplement sur l'application d'un coefficient multiplicateur sur chaque composante. Selon l'invention, on tient compte de l'ensemble des perturbations du canal de transmission, ou à tout le moins des perturbations dues à certaines de ces porteuses. On vérifie que cette technique permet d'obtenir de meilleurs résultats, notamment lorsque le système ne fonctionne pas à pleine charge.

Ainsi, l'invention concerne une technique d'égalisation qui minimise l'erreur quadratique moyenne sur l'ensemble du signal reçu, en y intégrant les fonctions de désétalement. Cette approche nécessite donc également de prendre en compte les différents codes d'étalement des utilisateurs actifs.

De façon avantageuse, ladite étape d'égalisation met en oeuvre une matrice d'égalisation portant des coefficients d'égalisation du canal de transmission, au moins certains des coefficients autres que les coefficients de la diagonale de la matrice étant parfois non nuls.

Il est ainsi aisé de mettre en oeuvre la technique de l'invention, dans les récepteurs.

Avantageusement, les coefficients de ladite matrice de pondération sont déterminés selon la technique du filtrage de Wiener appliquée globalement sur l'ensemble du signal reçu, en tenant compte des fonctions de désétalement.

Cette matrice de pondération peut ainsi s'écrire :

$$G = H^{\bullet} . \left( H.C.A.C^{T} .H^{\bullet} + \frac{\sigma_{N}^{2}}{E_{s}} .I \right)^{-1} \qquad (14)$$

avec :

> H : matrice représentative du canal de transmission ;
> C : matrice des codes d'étalement ;
> $A = \{a_{jj}\}$ : matrice diagonale avec $a_{jj}$ non nul si l'utilisateur j est actif ;
> $\sigma^{2}_{N}$: variance du bruit affectant chaque sous-porteuse ;
> $E_{s} = E \{x_{j}^{2}\}$ : puissance des signaux reçus ;
> I : matrice identité.

Lorsque $\sigma^{2}_{N}/Es$ tend vers 0, il peut arriver que cette matrice ne soit pas inversible. Pour pallier ce problème, on peut prévoir que la quantité estimée $\sigma^{2}_{N}/E_{s}$ soit comparée à une valeur seuil, et remplacée par ladite valeur seuil lorsqu'elle est inférieure à cette dernière.

Avantageusement, on peut également prévoir que, lorsque la quantité estimée $\sigma^{2}_{N}/E_{s}$ est inférieure à une valeur seuil, on met en oeuvre une technique de détection alternative, telle que la technique dite ORC.

Une autre solution avantageuse à ce problème consiste à déterminer ladite matrice de pondération à l'aide d'un processus itératif mettant en oeuvre un algorithme du gradient.

Lorsque le procédé de réception met en oeuvre une technique de détection multi-utilisateurs non linéaire d'annulation de type parallèle et/ou série, (les différents codes d'étalement des multiples utilisateurs étant connus du récepteur), la même technique d'égalisation est avantageusement utilisée dans une étape d'annulation de l'interférence d'accès multiples, due aux autres utilisateurs.

Dans ce cas, ladite étape d'annulation peut être itérative, et comprendre au moins deux étages d'égalisation successifs.

Le procédé de l'invention peut donc comprendre les étapes suivantes :

- une étape initiale délivrant une estimation de l'interférence multi-utilisateur ;
- une étape de soustraction de ladite estimation de l'interférence multi-utilisateur au signal reçu ;
- une étape d'égalisation sur le signal corrigé ainsi obtenu.

L'invention concerne également le procédé d'égalisation mis en oeuvre dans le procédé de réception décrit ci-dessus, ainsi que les dispositifs de réception mettant en oeuvre ces procédés.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :

- la figure 1 présente un synoptique général d'une chaîne de transmission et de réception MC-CDMA, de type connu ;
- la figure 2 illustre un synoptique général d'une chaîne de transmission et de réception MC-CDMA selon l'invention ;
- la figure 3 est une comparaison des performances de différentes techniques de détection linéaire ;
- la figure 4 présente un synoptique général d'un récepteur MC-CDMA multi-utilisateur non-linéaire à annulation d'interférences parallèle.

### 6. Description d'un mode de réalisation préférentiel

6.1 La nouvelle technique de détection proprosée (le MMSE matriciel)

Cette nouvelle technique de détection a donc pour but de minimiser l'erreur quadratique moyenne globalement sur l'ensemble du signal reçu. Si on appelle $W_{j} = [w_{j}^{0}, w_{j}^{1}, ..., w_{j}^{Np}]$ le vecteur de pondération optimal, le symbole restitué au $j^{ème}$ utilisateur peut s'écrire :

$$\hat{x}_j = W_j^T . R = C_j^T . G . R \qquad (10)$$

On constate donc que l'on tient compte, lors de cette opération de minimisation de l'erreur quadratique moyenne, des fonctions de désétalement.

Selon le filtrage de Wiener, appliqué sur l'ensemble du signal reçu, le vecteur de pondération optimal est égal à :

$$W_j = \Gamma_{R,R}^{-1} . \Gamma_{R,x_j} \qquad (11)$$

où $\Gamma_{R,R}$ est la matrice d'autocorrélation du vecteur $R$ reçu et $\Gamma_{R,xj}$ est le vecteur d'intercorrélation entre le symbole, $x_j$ et le vecteur du signal reçu, $R$. Ces quantités sont égales à :

$$\Gamma_{R,R} = E\left\{R^*.R^T\right\} = H^*.C.E\left\{X^*X^T\right\}.C^T.H + E\left\{N^*.N^T\right\} \qquad (12)$$

$$\Gamma_{R,x_j} = E\left\{R^*.x_j\right\} = H^*.C.E\left\{X^*x_j\right\}$$

où ( )* signifie complexe conjugué. Le vecteur de pondération optimal est alors égal à :

$$W_j^T = E\left\{x_j.X^{*T}\right\}.C^T.H^*.\left(H.C.E\left\{X.X^{*T}\right\}.C^T.H^* + E\left\{N.N^{*T}\right\}\right)^{1} \qquad (13)$$

Si les différents bruits affectant les sous-porteuses ont la même variance et sont indépendants, alors $E\{N,N^{*T}\}$ = $\sigma_N^2.I$ où $I$ est la matrice identité. Si les différents signaux des utilisateurs ont la même puissance $(E\{x_j^2\} = E_s)$ et sont indépendants, on peut écrire que $E\{X.X^{*T}\} = E_s\ A$, où $A = \{a_{jj}\}$ est une matrice diagonale avec $a_{jj}$ = 1 si l'utilisateur $j$ est actif et $a_{jj}$ = 0 si l'utilisateur $j$ est inactif. La matrice des coefficients d'égalisation est alors égale à :

$$G = H^*.\left(H.C.A.C^T.H^* + \frac{\sigma_N^2}{E_S}.I\right)^{-1} \qquad (14)$$

Bien sûr, les conditions citées dans le paragraphe précédent sur la variance et l'indépendance des bruits affectant les différentes sous-porteuses d'une part et sur la puissance des signaux ne sont absolument pas nécessaires pour valider l'approche.

Dans le cas de la pleine charge ($N_u = L_c$), et lorsqu'on utilise des codes orthogonaux comme les codes de Walsh-Hadamard, la quantité $C.A.C^T$ est égale à la matrice identité et la matrice $G$ des coefficients d'égalisation est alors une matrice diagonale avec le coefficient d'égalisation de la $k^{ème}$ sous-porteuse égal à l'expression (8) donnée dans le paragraphe précédent. On rappelle que, dans l'exemple présenté, les puissances de réception sont les mêmes pour tous les utilisateurs.

En revanche, dans tous les cas où $N_u < L_c$, la quantité $C.A.C^T$ n'est pas une matrice identité et la matrice $G$ des coefficients d'égalisation n'est pas une matrice diagonale. Le récepteur proposé est alors conforme au schéma de la figure 2.

Si la puissance de réception des signaux des différents utilisateurs n'est pas la même pour tous ces utilisateurs, la nouvelle approche reste optimale vis-à-vis du critère MMSE. Le calcul conduit dans ce cas à une matrice $A$, toujours diagonale si les utilisateurs sont indépendants, mais pour un utilisateur $j$ actif, $a_{jj}$ peut être différent de 1.

Contrairement à l'approche de l'invention, la technique classique selon le critère du MMSE conduit à une équation (8) non optimale dans les cas de non pleine charge, et même dans le cas de pleine charge, cette approche n'est pas optimale vis-à-vis du critère MMSE si la puissance des différents utilisateurs n'est pas identique.

La matrice $G$ est une matrice de dimension $N_p \times N_p$. La méthode proposée consiste donc non pas à multiplier chaque symbole généré en sortie de la FFT par un coefficient propre à chaque sous-porteuse, mais à traiter le vecteur signal **R** dans sa globalité conformément au calcul précédent en le multipliant par la matrice **G**.

Cette nouvelle technique de détection nécessite la connaissance des différents codes d'étalement des multiples utilisateurs, et à ce titre, elle peut être classée parmi les techniques de détection multi-utilisateurs de type linéaire.

L'application directe de l'équation (14) nécessite d'inverser la matrice correspondant au dénominateur de cette équation. Dans certains cas, en particulier lorsque la quantité $\sigma_N^2/E_s$ tend vers zéro, ce qui est vérifié lorsque le rapport signal à bruit est très élevé, la matrice telle qu'elle est exprimée par l'équation (14) peut ne pas être inversible.

Une première possibilité pour contourner cette difficulté consiste à utiliser un dispositif de seuillage de telle façon que la quantité estimée $\sigma_N^2/E_s$ soit bornée et donc égale au minimum à une valeur qui est optimisée en prenant en compte les paramètres précis du système considéré. Dans ce cas, la matrice est toujours inversible.

Une seconde possibilité pour contourner cette difficulté consiste à utiliser, lorsque la quantité estimée $\sigma_N^2/E_s$ tend vers zéro, une autre technique de détection comme par exemple la méthode "Orthogonality Restoring Combining" (ORC) présentée dans le paragraphe 2.3.1.

Par ailleurs, une alternative à l'inversion de matrice pour la mise en oeuvre de la nouvelle technique de détection proposée, appelée MMSE matriciel, est d'utiliser un processus itératif, s'appuyant sur un algorithme du gradient comme le LMS (Least Mean Square) par exemple. Dans ce cas, la minimisation de l'erreur quadratique moyenne selon le filtrage de Wiener, permet d'obtenir après plusieurs itérations les coefficients optimaux de la matrice d'égalisation G donnés par l'équation (14).

6.2 Application aux techniques de détection non linéaire à annulation d'interférences

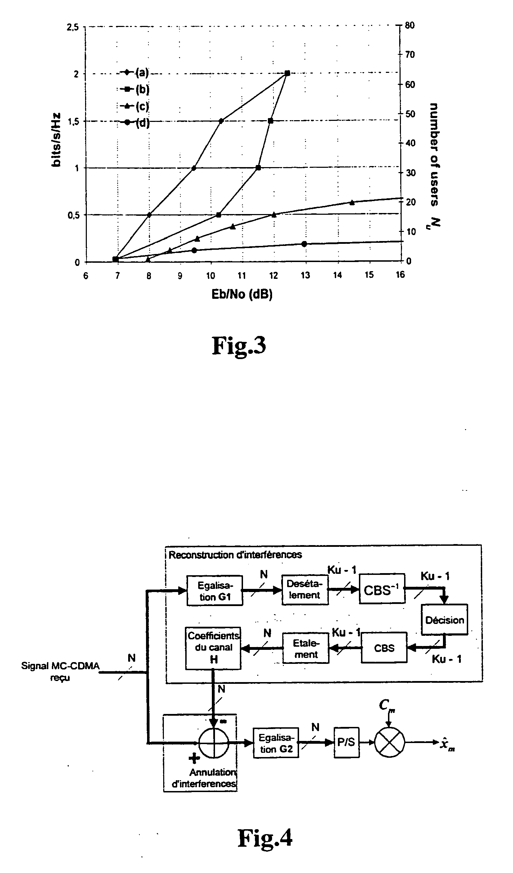

Il existe principalement trois grandes catégories de détecteurs multi-utilisateurs : les détecteurs à maximum de vraisemblance (Maximum Likelihood Detectors MLD), les détecteurs linéaires comme le détecteur proposé ci-dessus, et les détecteurs non linéaires à annulation d'interférences. Dans ce paragraphe, on s'intéresse plus particulièrement à cette troisième catégorie. Les détecteurs à annulation d'interférence de type parallèle tels qu'illustrés en figure 4, de même que les détecteurs à annulation d'interférences de type série cherchent à estimer l'interférence due aux autres signaux afin de retrancher cette interférence multi-utilisateur au signal reçu. Ce procédé peut être mis en oeuvre de façon itérative, à l'aide de plusieurs étages de détection successifs. Différentes techniques de détection mono-utilisateur peuvent ainsi être combinées dans les différents étages. Le nouveau procédé proposé pour la mise en oeuvre de l'algorithme de détection MMSE peut, lui aussi, être choisi à chaque étage d'un détecteur multi-utilisateur à annulation d'interférences. Dans ce cas, la matrice A de l'équation (14) doit être optimisée de façon spécifique à chaque étage. Il devient ainsi possible de combiner des détecteurs multi-utilisateurs linéaires et non linéaires.

A titre d'exemple, la figure 4 présente le schéma de principe d'un détecteur à annulation d'interférences de type parallèle à deux étages mettant en oeuvre la nouvelle technique de détection proposée. Dans l'étage initial, les symboles des $K_u$-1 autres utilisateurs actifs sont détectés en parallèle en mettant en oeuvre le nouvel algorithme MMSE matriciel (matrice d'égalisation G1) Il est ainsi possible, après désétalement, "demapping" (CBS$^{-1}$), prise de décision, "mapping" (Codage Binaire à Signal - CBS), étalement et multiplication par la matrice H des coefficients du canal, d'obtenir une estimation de l'interférence multi-utilisateur qui est alors soustraite au signal reçu. Le deuxième étage effectue ensuite la détection finale en utilisant à nouveau le nouvel algorithme MMSE matriciel (matrice d'égalisation G2).

6.3 Exemple de résultats

Les résultats présentés sont obtenus avec des processus de Rayleigh indépendants et de même puissance sur chaque sous-porteuse, le canal étant considéré non sélectif en fréquence sur chacune de ces sous-porteuses. Le bruit blanc additif gaussien est aussi généré par des processus de même puissance et indépendants pour chaque sous-porteuse. Les codes utilisés sont de Walsh-Hadamard et le codage binaire à signal est celui d'une MDP4.

La figure 3 présente les performances de différentes techniques de détection mono-utilisateurs avec $L_c = N_p = 64$ en prenant en compte l'efficacité spectrale en fonction du rapport $E_b/N_0$ nécessaire pour obtenir un TEB = $10^{-3}$. L'efficacité spectrale maximum est égale à 2 bit/s/Hz, correspondant à un système à pleine charge ($Nu = Lc = N_p$), car les pertes dues à l'intervalle de garde, la synchronisation et l'estimation de canal (porteuses pilotes par exemple) ne sont pas prises en compte.

La courbe (b) donne les performances du système MMSE traditionnel avec les coefficients d'égalisation optimisés indépendamment sur chaque sous-porteuse conformément à l'expression (9) à raison d'un coefficient par sous-porteuse. La courbe (a) correspond aux performances du nouveau système MMSE utilisant l'approche matricielle avec les coefficients de la matrice d'égalisation donnés par l'expression (14). A pleine charge ($N_u = 64$), les performances des deux systèmes MMSE sont identiques. En revanche, lorsque le système n'est pas à pleine charge ($N_u < 64$), le nouveau système MMSE matriciel offre un gain d'environ 2 dB pour $N_u$ =32 et 16, ce qui correspond à une efficacité spectrale respectivement égale à 1 et 0.5 bit/s/Hz.

**Revendications**

1. Procédé de réception d'un signal mettant en oeuvre une modulation à porteuses multiples et à accès multiple par répartition de codes d'étalement ($C_i$, $C_{Nu}$),
   du type comprenant une étape de démodulation par application d'une transformation mathématique du domaine temporel vers le domaine fréquentiel, une étape d'égalisation du signal transformé et une étape de désétalement. ($C_j$) du signal égalisé,
   **caractérisé en ce que** ladite étape d'égalisation tient compte, pour chacune des composantes dudit signal transformé, des perturbations affectant la porteuse portant ladite composante et au moins une autre desdites porteuses et d'au moins certains desdits codes d'étalement.

2. Procédé de réception selon la revendication 1, **caractérisé en ce que** ladite étape d'égalisation met en oeuvre une matrice d'égalisation (G) portant des coefficients d'égalisation représentatifs du canal de transmission, au moins certains des coefficients autres que les coefficients de la diagonale de la matrice (G) étant parfois non nuls.

3. Procédé de réception selon la revendication 2, **caractérisé en ce que** les coefficients de ladite matrice de pondération (G) sont déterminés selon la technique du filtrage de Wiener appliquée globalement sur l'ensemble du signal reçu, en tenant compte des fonctions de désétalement.

4. Procédé de réception selon la revendication 3, **caractérisé en ce que** ladite matrice de pondération s'écrit :

$$G = H^{\bullet}.\left( H.C.A.C^T.H^{\bullet} + \frac{\sigma_N^2}{E_s}.I \right)^{-1} \qquad (14)$$

avec :

H : matrice représentative du canal de transmission ;
C : matrice des codes d'étalement ;
A = {$a_{jj}$} : matrice diagonale avec $a_{jj}$ non nul si l'utilisateur j est actif ;
$\sigma_N^2$ : variance du bruit affectant chaque sous-porteuse :
$E_s$: puissance moyenne des signaux reçus ;
1: matrice identité.

5. Procédé de réception selon la revendication 4, **caractérisé en ce que** la quantité estimée $\sigma_N^2/E_s$ est comparée à une valeur seuil, et remplacée par ladite valeur seuil lorsqu'elle est inférieure à cette dernière.

6. Procédé de réception selon la revendication 4, **caractérisé en ce que** l'on met en oeuvre une méthode de détection alternative lorsque la quantité estimée $\sigma_N^2/E_s$ est inférieure à une valeur seuil prédéterminée.

7. Procédé de réception selon l'une quelconque des revendications 3 à 5, **caractérisé en ce que** ladite matrice de pondération (G) est déterminée à l'aide d'un processus itératif mettant en oeuvre un algorithme du gradient.

8. Procédé de réception selon l'une quelconque des revendications 1 à 7, du type mettant en oeuvre une technique de détection multi-utilisateurs, selon laquelle les différents codes d'étalement des multiples utilisateurs sont connus du récepteur,
   **caractérisé en ce que** la même technique d'égalisation est également utilisée dans une étape d'annulation d'interférences d'accès multiples.

9. Procédé de réception selon la revendication 8, **caractérisé en ce que** ladite étape d'annulation d'interférences est itérative, et comprend au moins deux étages d'égalisation successifs.

10. Procédé de réception selon l'une quelconque des revendications 8 et 9, **caractérisé en ce qu'**il met en oeuvre :

    - une étape initiale délivrant une estimation de l'interférence multi-utilisateur ;
    - une étape de soustraction de ladite estimation de l'interférence multi-utilisateur au signal reçu ;
    - une étape d'égalisation sur le signal corrigé ainsi obtenu.

**11.** Procédé d'égalisation d'un signal transformé,
ledit signal transformé étant issu d'une étape de démodulation d'un signal reçu mettant en oeuvre une modulation à porteuses multiples et à accès multiple par répartition de codes d'étalement ($C_I$, $C_{Nu}$), par application d'une transformation mathématique du domaine temporel vers le domaine fréquentiel,
**caractérisé en ce qu'**il tient compte, pour chacune des composantes dudit signal transformé, des perturbations affectant la porteuse portant ladite composante et au moins une autre desdites porteuses et d'au moins certains desdits codes d'étalement.

**12.** Dispositif de réception mettant en oeuvre le procédé selon l'une quelconque des revendications 1 à 11.

**Claims**

**1.** Method for receiving a signal implementing multiple-carrier modulation with multiple access by division of spreading codes ($C_1$, $C_{Nu}$),
of the type comprising a step of demodulation by applying a mathematical transformation from the time domain to the frequency domain, a step of equalizing the transformed signal and a step of despreading ($C_j$) the equalized signal, **characterized in that** said equalization step takes account, for each of the components of the said transformed signal, of the disturbances affecting the carrier carrying the said component and at least one other of the said carriers and of at least certain of the said spreading codes.

**2.** Reception method according to Claim 1, **characterized in that** the said equalization step implements an equalization matrix (G) carrying equalization coefficients representative of the transmission channel, at least certain of the coefficients other than the coefficients of the diagonal of the matrix (G) sometimes being non-zero.

**3.** Reception method according to Claim 2, **characterized in that** the coefficients of the said weighting matrix (G) are determined according to the Wiener filtering technique applied globally to the whole of the signal received, while taking account of the despreading functions.

**4.** Reception method according to Claim 3, **characterized in that** the said weighting matrix may be written:

$$G = H^* \cdot \left( H \cdot C \cdot A \cdot C^T \cdot H^* + \frac{\sigma_N^2}{E_S} \cdot I \right)^{-1}$$

$$(14)$$

with:

H: matrix representative of the transmission channel;
C: matrix of the spreading codes;
A = {$a_{jj}$}: diagonal matrix with $a_{jj}$ non-zero if user j is active;
$\sigma_N^2$: variance of the noise affecting each subcarrier;
$E_s$: mean power of the signals received;
I: identity matrix.

**5.** Reception method according to Claim 4, **characterized in that** the estimated quantity $\sigma_N^2/E_S$ is compared with a threshold value, and replaced with the said threshold value when it is lower than the latter.

**6.** Reception method according to Claim 4, **characterized in that** an alternate detection scheme is implemented when the estimated quantity $\sigma_N^2/E_S$ is less than a predetermined threshold value.

**7.** Reception method according to any one of Claims 3 to 5, **characterized in that** the said weighting matrix (G) is determined with the aid of an iterative process implementing a gradient algorithm.

**8.** Reception method according to any one of Claims 1 to 7, of the type implementing a multi-user detection technique, according to which the various spreading codes of the multiple users are known to the receiver, **characterized in that** the same equalization technique is also used in a multiple access interference cancellation step.

9. Reception method according to Claim 8, **characterized in that** the said interference cancellation step is iterative, and comprises at least two successive equalization stages.

10. Reception method according to any one of Claims 8 and 9, **characterized in that** it implements:

   - an initial step delivering an estimation of the multi-user interference;
   - a step of subtracting the said estimation of the multi-user interference from the signal received;
   - a step of equalization on the corrected signal thus obtained.

11. Method for equalizing a transformed signal, the said transformed signal arising from a step of demodulating a signal received implementing multiple-carrier modulation with multiple access by division of spreading codes ($C_1$, $C_{Nu}$), by applying a mathematical transformation from the time domain to the frequency domain, **characterized in that** it takes account, for each of the components of the said transformed signal, of the disturbances affecting the carrier carrying the said component and at least one other of the said carriers and of at least certain of the said spreading codes.

12. Reception device implementing the method according to any one of Claims 1 to 11.

**Patentansprüche**

1. Verfahren für den Empfang eines Signals, das eine Mehrträger- und Spreizcodemultiplex-Vielfachzugriff-Modulation ($C_1$, $C_{Nu}$) von dem Typ anwendet, der einen Schritt der Demodulation durch Anwendung einer mathematischen Transformation von der Zeitdomäne zur Frequenzdomäne, einen Schritt der Entzerrung des transformierten Signals und einen Schritt der Entspreizung ($C_j$) des entzerrten Signals aufweist, **dadurch gekennzeichnet, dass** der Entzerrungsschritt für jede der Komponenten des transformierten Signals die Störungen, die sich auf den die Komponente tragenden Träger und mindestens einen anderen der Träger auswirken, und mindestens bestimmte der Spreizcodes berücksichtigt.

2. Empfangsverfahren nach Anspruch 1, **dadurch gekennzeichnet, dass** der Entzerrungsschritt eine Entzerrungsmatrix (G) einsetzt, die für den Übertragungskanal repräsentative Entzerrungskoeffizienten trägt, wobei mindestens manche der anderen Koeffizienten als die Koeffizienten der Diagonale der Matrix (G) manchmal ungleich Null sind.

3. Empfangsverfahren nach Anspruch 2, **dadurch gekennzeichnet, dass** die Koeffizienten der Gewichtungsmatrix (G) gemäß der Technik der Wiener-Filterung bestimmt werden, die unter Berücksichtigung der Entspreizungsfunktionen global an die Gesamtheit des empfangenen Signals angewendet wird.

4. Empfangsverfahren nach Anspruch 3, **dadurch gekennzeichnet, dass** die Gewichtungsmatrix folgendermaßen geschrieben wird:

$$G = H^* \cdot \left( H.C.A.C^T.H^* + \frac{\sigma_N^2}{E_s}.I \right)^{-1}$$

(14)

mit:

H: für den Übertragungskanal repräsentative Matrix;
C: Matrix der Spreizcodes;
A={$a_{jj}$}: Diagonalmatrix mit $a_{jj}$ ungleich Null, wenn der Benutzer j aktiv ist;
$\sigma_N^2$: Varianz des Rauschens, das sich auf jeden Subträger auswirkt;
Es: mittlere Leistung der empfangenen Signale;
I: Identitätsmatrix.

5. Empfangsverfahren nach Anspruch 4, **dadurch gekennzeichnet, dass** die geschätzte Menge $\sigma_N^2/E_s$ mit einem

Schwellwert verglichen und durch den Schwellwert ersetzt wird, wenn sie unter diesem liegt.

6. Empfangsverfahren nach Anspruch 4, **dadurch gekennzeichnet, dass** eine alternative Erfassungsmethode eingesetzt wird, wenn die geschätzte Menge $o^2_N/E_s$ unter einem vorbestimmten Schwellwert liegt.

7. Empfangsverfahren nach einem der Ansprüche 3 bis 5, **dadurch gekennzeichnet, dass** die Gewichtungsmatrix (G) mit Hilfe eines iterativen Prozesses bestimmt wird, der einen Gradienten-Algorithmus ausführt.

8. Empfangsverfahren nach einem der Ansprüche 1 bis 7 von dem Typ, der eine Technik der Erfassung von Mehrbenutzern einsetzt, gemäß der die verschiedenen Spreizcodes der mehreren Benutzer dem Empfänger bekannt sind, **dadurch gekennzeichnet, dass** die gleiche Entzerrungstechnik ebenfalls in einem Schritt der Unterdrückung von Mehrfachzugriff-Interferenzen verwendet wird.

9. Empfangsverfahren nach Anspruch 8, **dadurch gekennzeichnet, dass** der Schritt der Interferenzunterdrückung iterativ ist und mindestens zwei aufeinanderfolgende Entzerrungsstufen aufweist.

10. Empfangsverfahren nach einem der Ansprüche 8 und 9, **dadurch gekennzeichnet, dass** es ausführt:

   - einen Ausgangsschritt, der eine Schätzung der Mehrbenutzer-Interferenz liefert;
   - einen Schritt der Subtraktion der Schätzung der Mehrbenutzer-Interferenz vom empfangenen Signal;
   - einen Schritt der Entzerrung am so erhaltenen, korrigierten Signal.

11. Verfahren zur Entzerrung eines transformierten Signals, wobei das transformierte Signal von einem Schritt der Demodulation eines empfangenen Signals stammt, der eine Mehrträger- und Spreizcodemultiplex-Vielfachzugriff-Modulation ($C_1$, $C_{Nu}$) durch Anwendung einer mathematischen Transformation von der Zeitdomäne zur Frequenzdomäne ausführt, **dadurch gekennzeichnet, dass** es für jede der Komponenten des transformierten Signals die Störungen, die sich auf den die Komponente tragenden Träger und mindestens einen anderen der Träger auswirken, und mindestens bestimmte der Spreizcodes berücksichtigt.

12. Empfangsvorrichtung, die das Verfahren nach einem der Ansprüche 1 bis 11 ausführt.

**Fig.1**

**Fig.2**

**Fig.3**

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. HARA ; R. PRASAD.** Overview of multicarrier CD-MA. *IEEE Communications Magazine,* Décembre 1997, 126-133
- **S. KAISER.** Analytical performance evaluation of OFDM-CDMA mobile radio systems. *Proceedings First European Personal and Mobile Communications Conférence (EPMCC'95,* Novembre 1995, 215-220

- **Y. SANADA.** A multiuser interfernce cancellation technique utilizing convolutional codes and orthogonal multicarrier modulation for wireless indoor communications. *IEEE Journal on Selected Areas in Communications,* Octobre 1996, vol. 14 (8